# EUROPÄISCHE PATENTSCHRIFT

(11) **EP 3 523 816 B1**
(45) Veröffentlichungstag und Bekanntmachung des Hinweises auf die Patenterteilung: **19.08.2020**
(21) Anmeldenummer: 17780390.5
(22) Anmeldetag: 05.10.2017
(51) Int. Cl.: H01F 38/14, G02B 6/24, H01R 24/00, H04B 5/00, H02J 50/10

(54) **VORRICHTUNG ZUR KONTAKTLOSEN INDUKTIVEN ENERGIEÜBERTRAGUNG UND BETRIEBSVERFAHREN FÜR EINE DERARTIGE VORRICHTUNG**
DEVICE FOR CONTACTLESS INDUCTIVE ENERGY TRANSMISSION AND OPERATING METHOD FOR SUCH A DEVICE
DISPOSITIF DE TRANSFERT D'ÉNERGIE PAR INDUCTION SANS CONTACT ET PROCÉDÉ DE FONCTIONNEMENT D'UN TEL DISPOSITIF

(30) Priorität: 10.10.2016 DE 102016119213; 31.01.2017 DE 102017101891
(43) Veröffentlichungstag der Anmeldung: 14.08.2019
(73) Patentinhaber: Weidmüller Interface GmbH & Co. KG, 32758 Detmold (DE)
(72) Erfinder: GRÜNBERG, Olaf, 32825 Blomberg (DE); NEU, Marc, 32689 Kalletal (DE)
(74) Vertreter: Kleine, Hubertus
(86) Internationale Anmeldenummer: PCT/EP2017/075324
(87) Internationale Veröffentlichungsnummer: WO 2018/069136

(56) Entgegenhaltungen:
- DE-A1- 4 344 071
- DE-B1- 2 752 783
- DE-B3-102012 212 254

## Beschreibung

Die Erfindung betrifft eine Vorrichtung zur kontaktlosen Energieübertragung von einem Primärteil auf ein Sekundärteil, die jeweils mindestens eine Spule aufweisen, die induktiv über einen Luftspalt hinweg miteinander koppelbar sind, wobei das Primärteil und das Sekundärteil jeweils eine Datenübertragungseinheit zur optisch erfolgenden Übertragung von Daten über den Luftspalt aufweisen und wobei die Datenübertragungseinheiten jeweils ein Lichtleitelement aufweisen und das Lichtleitelement im Wesentlichen zylindrisch geformt ist und eine zu Sende- bzw. Empfangselementen weisende erste Lichtein- bzw. - austrittsfläche und eine zum Luftspalt weisende zweite Lichtein- bzw. - austrittsfläche aufweist. Die Erfindung betrifft weiterhin ein Betriebsverfahren für eine derartige Vorrichtung zur kontaktlosen induktiven Energieübertragung von einer Spule eines Primärteils zu einer Spule eines Sekundärteils.

Gegenüber Steckverbindern, bei denen eine Energieübertragung über mechanisch zu verbindende bzw. zu trennende Kontaktelemente erfolgt, besitzen Vorrichtungen zur kontaktlosen Energieübertragung Vorteile bezüglich eines Verschleißes durch eine hohe Zahl von Steckzyklen oder starken Vibrationen. Zudem ist ein Kontaktabbrand bei einem Ein- oder Ausstecken unter elektrischer Last verhindert. Auch die Gefahr des Ausbildens von Lichtbögen beim Trennen von Steckverbindern mit einer hohen Strombelastung ist bei kontaktlosen Vorrichtungen zur Energieübertragung nicht gegeben. Schließlich liegt bei der kontaktlosen Übertragung von Energie eine galvanische Trennung zwischen dem Primärteil und dem Sekundärteil vor, die beispielsweise beim Einsatz im medizinischen Bereich gefordert sein kann. Das Fehlen der mechanisch aufwendig ineinander greifenden Kontakte ermöglicht zudem eine Gestaltung der Vorrichtung mit möglichst glatten Oberflächen, was die kontaktlosen Vorrichtungen zur Energieübertragung geeignet für Anwendungszwecke mit einer erhöhten Anforderung an Sauberkeit/Hygiene prädestiniert, beispielsweise im Lebensmittelbereich.

Insbesondere die hohe Verschleißfestigkeit macht eine kontaktlose induktive Energieübertragung auch im Automatisierungsbereich interessant, beispielsweise zur Übertragung von Energie an ein Wechselwerkzeug eines Roboters.

Aus der Druckschrift DE 10 2012 212 254 B3 ist ein Steckverbinder mit zwei identisch aufgebauten Verbindern bekannt, die durch eine Magnetanordnung in einer vorgegebenen Position mechanisch miteinander koppeln. In der Kopplungsposition kann über jeweils in den Verbindern angeordnete Spulen Energie übertragen werden. Die Spulen weisen eine zentrale Öffnung auf, in der jeweils eine optische Sende- und Empfangseinheit angeordnet ist, über die Daten zwischen den beiden Verbindern übertragen werden können. In einem Ausführungsbeispiel sind die optischen Sende- und Empfangseinheiten auf beiden Seiten identisch als konvex geformte Leucht- oder Laser- bzw. Photodioden ausgebildet.

Ähnliche Steckverbinder mit induktiver Energie- und optischer Datenübertragung sind auch aus den Druckschriften DE 27 52 783 B1 und DE 43 44 071 A1 bekannt. Bei der Druckschriften DE 27 52 783 B1 sind die Sende- und Empfangseinheiten mit planaren Endflächen ausgebildet, die im Betrieb aufeinander liegen. Die genannten Steckverbinder weisen jeweils mechanische Vorkehrungen auf, durch die die einzelnen Verbinder im Betrieb jeweils in einer vorgegebenen mechanischen Position zueinander fixiert sind.

Die Druckschrift WO 2013/087676 A2 beschreibt eine Vorrichtung zur kontaktlosen induktiven Energieübertragung von einem Primärteil zu einem Sekundärteil, die eine mechanische Steckvorrichtung zur Energieübertragung beispielsweise an ein Wechselwerkzeug eines Roboters ersetzen kann. Primär- und Sekundärteil weisen jeweils mindestens eine Spule auf, die induktiv miteinander koppelbar sind und die jeweils mit einem Ferritkern zusammenwirken. Der Ferritkern erhöht den magnetischen Fluss durch seine Permeabilität derart, dass auch bei kleinen Baugrößen der Vorrichtung und kleinen Übertragungsflächen hohe elektrische Leistungen übertragen werden können.

Eine Energieübertragung ist durch den hohen magnetischen Fluss dabei auch dann bereits möglich, wenn das Primär- und das Sekundärteil sich (noch) nicht in einer Position befinden, in der der Abstand zwischen ihnen minimal ist, sondern wenn ein Spalt zwischen ihnen besteht. Ebenso kann eine Energieübertragung auch bei einem gewissen seitlichen (lateralen) Versatz von Primär- und Sekundärteil erfolgen, also wenn sich die Spulen von Primär- und das Sekundärteil nicht auf einer gemeinsamen Achse befinden.

Es ist eine Aufgabe der vorliegenden Erfindung, die Einsatzmöglichkeiten einer derartigen Vorrichtung zur kontaktlosen Energieübertragung, bei der auch ein gewisser seitlicher Versatz tolerabel ist, insbesondere zur Nutzung im Automatisierungsbereich um eine optische Datenübertragung zu erweitern.

Diese Aufgabe wird durch eine Vorrichtung bzw. ein Betriebsverfahren für eine solche Vorrichtung mit den jeweiligen Merkmalen der unabhängigen Ansprüche gelöst. Vorteilhafte Ausgestaltungen und Weiterbildungen der Vorrichtung und des Betriebsverfahrens sind in den abhängigen Ansprüchen angegeben.

Eine erfindungsgemäße Vorrichtung der eingangs genannten Art zeichnet sich dadurch aus, dass das Primärteil und das Sekundärteil jeweils eine Datenübertragungseinheit zur Übertragung von Daten über den Luftspalt aufweisen. Insbesondere bei Verwendung im Automatisierungsbereich im industriellen Umfeld wird neben Versorgungsstrom häufig auch eine Datenanbindung benötigt, z.B. bei einem Austauschwerkzeug eines Roboterarms. Die Übertragung von Strom und Daten gemeinsam durch eine einzige Vorrichtung mit nur einem Primär - und einem Sekundärteil vereinfacht die Einrichtung und Wartung der Anordnung.

Die Übertragung der Daten über den Luftspalt erfolgt optisch. Damit ist ein Datenübertragungskanal gewählt, der in keinerlei Störsituation mit der induktiven Energieübertragung steht.

Bevorzugt sind die die Datenübertragungseinheiten mittig und konzentrisch zu den Spulen angeordnet. Der sich in der Mitte der Spulen befindende Raum kann so genutzt werden, wodurch die Datenübertragungseinheiten in Primär- bzw. Sekundärteil integriert werden können, ohne dass sich deren Abmessungen im Vergleich zu Systemen, die nur der Energieübertragung dienen, vergrößern.

Bevorzugt ist das Sendeelement zentral angeordnet und von mehreren Empfangselementen umgeben.

Die Datenübertragungseinheiten weisen jeweils ein Lichtleitelement auf. Dieses ist im Wesentlichen zylindrisch geformt und weist eine zu den Sende- bzw. Empfangselementen weisende erste Lichtein- bzw. -austrittsfläche und eine zum Luftspalt weisende zweite Lichtein- bzw. -austrittsfläche auf. Die Lichtleitelemente unterstützen die Effizienz der Übertragung und ermöglichen eine Übertragung auch beim Vorliegen eines lateralen Versatzes und/oder einer Abstandsvariation von Primärteil und Sekundärteil. Zudem ist der Bauraum im Spulenzentrum beschränkt. Das Lichtleitelement kann zylinderförmig mit einem Durchmesser ausgebildet sein, der gerade in das Spulenzentrum passt. Für das Sendeelement und das Empfangselement steht dann außerhalb der Spule ein größerer Bauraum zur Verfügung. Erfindungsgemäß ist die erste Lichtein- bzw. -austrittsfläche planar und die zweite Lichtein- bzw. -austrittsfläche konkav geformt, was im Hinblick auf einen Ausgleich eines lateralen Versatzes besonders vorteilhaft ist.

Ein Betriebsverfahren für eine derartige Vorrichtung zur kontaktlosen induktiven Energieübertragung von einer Spule eines Primärteils zu einer Spule eines Sekundärteils über einen Luftspalt zeichnet sich dadurch aus, dass während der induktiven Energieübertragung von dem Primärteil zu dem Sekundärteil eine optische Übertragung von Daten zwischen dem Primärteil und dem Sekundärteil über den Luftspalt mithilfe von Datenübertragungseinheiten erfolgt, die in das Primärteil und das Sekundärteil integriert sind. Die Übertragung erfolgt dabei bevorzugt bidirektional in einem Halb- oder Vollduplex-Verfahren. Es ergeben sich die im Zusammenhang mit der Vorrichtung zuvor beschriebenen Vorteile.

Die Erfindung wird nachfolgend anhand von Ausführungsbeispielen mithilfe von Figuren näher erläutert. Die Figuren zeigen:
- Figur 1: eine Schnittansicht einer Vorrichtung zur kontaktlosen Energieübertragung;
- Figur 2: eine weitere Schnittansicht der in Figur 1 dargestellten Vorrichtung;
- Figur 3: eine schematische Seitenansicht einer Datenübertragungseinheit einer Vorrichtung zur kontaktlosen Energieübertragung;
- Figur 4: eine Draufsicht auf die Datenübertragungseinheit gemäß Figur 3;
- Figur 5: ein Lichtleitelement einer Datenübertragungseinheit einer Vorrichtung zur kontaktlosen Energieübertragung in einer Schnittdarstellung;
- Figur 6: eine alternative Ausgestaltung einer Datenübertragungseinheit in einer Draufsicht; und
- Figur 7: ein Blockschaltbild eines Ausführungsbeispiels einer Datenübertragungseinheit.

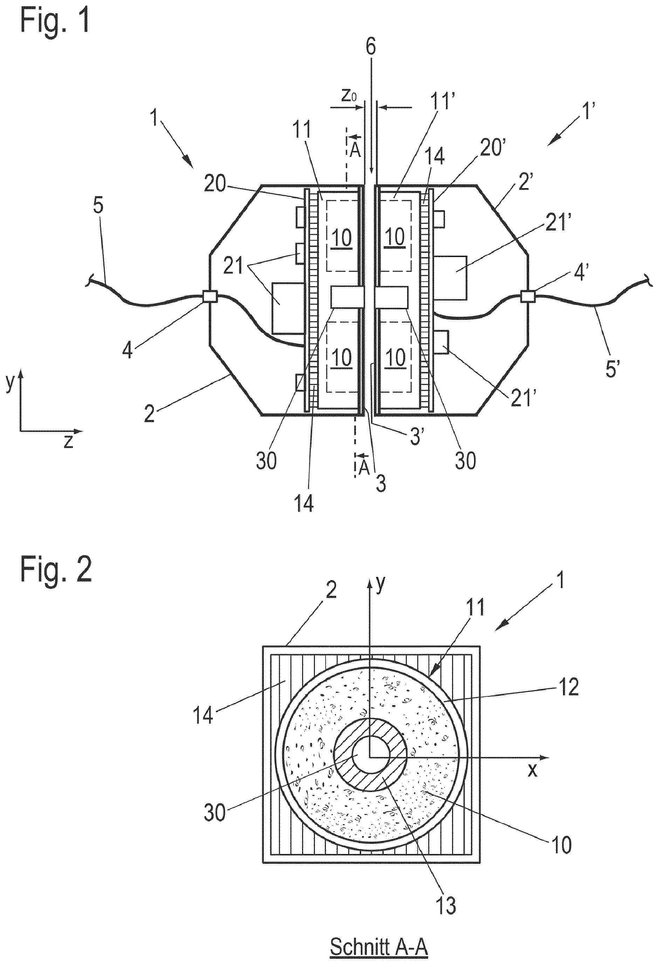

Figur 1 zeigt ein schematisches Schnittbild einer anmeldungsgemäßen Vorrichtung zur kontaktlosen Energieübertragung von einem Primärteil 1 zu einem Sekundärteil 1'. In Figur 2 ist das Primärteil 1 in einem Schnitt entlang der in Figur 1 dargestellten Schnittlinie A-A wiedergegeben.

Elemente, die dem Primärteil 1 zugeordnet sind, im Folgenden auch primärseitige Elemente genannt, tragen in den Figuren Bezugszeichen ohne Apostroph. Elemente, die dem Sekundärteil 1' zugeordnet sind, im Folgenden auch sekundärseitige Elemente genannt, tragen Bezugszeichen mit einem entsprechenden Apostroph. Dabei sind primärseitige und sekundärseitige Elemente, die die gleiche oder eine vergleichbare Funktion aufweisen, mit Bezugszeichen mit denselben Zahlen versehen. Wenn im Folgenden nicht explizit auf die Primär- oder Sekundärseite verwiesen wird, werden Bezugszeichen ohne Apostroph verwendet, die sich auf beide Seiten beziehen.

Primärteil 1 und Sekundärteil 1' weisen jeweils ein Gehäuse 2 auf, das aus einem für Steckergehäuse üblichen Material wie Kunststoff, Aluminium oder Edelstahl oder dergleichen gefertigt sein kann. Die Gehäuse 2 sind halbschalenförmig ausgeführt, wobei ihre vordere Seite mit einer Frontplatte 3 verschlossen ist. Im hinteren Bereich, von der Frontplatte 3 weg weisend, ist in das Gehäuse 2 eine Kabeldurchführung 4 für ein Anschlusskabel 5 eingebracht. Bevorzugt ist das Anschlusskabel 5 eine Hybridleitung, die Anschlussleitungen zur Energiezufuhr, u.a. der zu übertragenden Energie, aufweist sowie Datenleitungen. Alternativ können Energie und Daten auch in getrennten Leitungen zugeführt werden. Anstelle von fest angeordneten Leitungen können auch Steckverbinder am Gehäuse 2 angeordnet sein.

Unmittelbar hinter der Frontplatte 3 ist jeweils eine Spule 10 angeordnet, die auf einen Ferritkern 11 gewickelt ist, bzw. auf einen Spulenkörper gewickelt ist, der in den Ferritkern 11 eingelegt ist. Die Spule 10 kann mit einem einzelnen Leiter gewickelt sein. Zur Verringerung des Skin-Effekts ist allerdings eine Verwendung von mehradriger Hochfrequenzlitze bevorzugt.

Im dargestellten Ausführungsbeispiel ist der Ferritkern 11 primär- und sekundärseitig ein runder Topfkern mit einem äußeren Rand 12 und einem dazu konzentrischen inneren Dom 13. Ein solcher Kern wird auch als (zylindersymmetrischer) E-Kern bezeichnet. Dabei sind die Querschnitte des äußeren Rands 12 und des inneren Doms 13 bevorzugt näherungsweise gleich groß, um eine homogene magnetische Flussdichte unter Berücksichtigung der unterschiedlichen Streufelder im Ferritkern 11 zu erzielen. Die Verwendung von Ferritkernen mit anderer Geometrie ist ebenfalls möglich. Beispielsweise können quadratische oder rechteckige Kerne mit runden oder quadratischen bzw. rechteckigen Ferritkernen eingesetzt werden. Auch Spulen ohne Spulenkörper, z.B. mit miteinander verklebten Leitern können verwendet werden.

Zur jeweiligen Frontplatte 3 hin sind die Ferritkerne 11 offen, wohingegen auf der gegenüberliegenden Seite der äußere Rand 12 und der innere Dom 13 über einen Topfboden miteinander verbunden sind. Die Spule 10 ist jeweils in den hier ringförmigen Graben zwischen dem äußeren Rand 12 und dem inneren Dom 13 eingelegt. Ein eventuell noch vorhandener Spalt zwischen dem äußeren und inneren Rand der Spule 10 und dem Ferritkern 11 kann mit einem wärmeleitenden Medium ausgefüllt sein.

Im Betrieb werden zur kontaktlosen induktiven Energieübertragung das Primärteil 1 und das Sekundärteil 1' mit ihren Frontplatten 3, 3' aufeinander zuweisend in geringem Abstand zu einander gebracht. In der Figur 1 ist dieser Abstand, der einen Luftspalt 6 bildet, als Übertragungsabstand z₀ eingezeichnet. Die Größe eines zulässigen Übertragungsabstands z₀ liegt im Bereich von 0 bis einigen Millimetern oder Zentimetern, abhängig von der Größe, insbesondere dem Durchmesser der Spulen 10 bzw. Ferritkerne 11. Die Richtung entlang der Achse der primärseitigen Spule 10 wird nachfolgend als z-Richtung, die zugeordnete Achse als z-Achse bezeichnet. Senkrecht dazu verlaufen in der Ebene der Frontplatte 3 die x- und y-Richtungen bzw. Achsen.

Im Betrieb wird die primärseitige Spule 10, nachfolgend auch als Primärspule 10 bezeichnet, mit einem Wechselstrom beaufschlagt. Bevorzugt ist dabei aus der Primärspule 10 und einem Resonanzkondensator ein Resonanzkreis gebildet, dessen Frequenz im Bereich von einigen Kilohertz (kHz) bis einigen hundert kHz liegen, wobei eine Frequenz im Bereich von einigen zehn kHz besonders bevorzugt ist. Der Wechselstrom, mit der die Primärspule 10 beaufschlagt wird, wird von einem Wechselrichter bereitgestellt. Im Wechselrichter kann zur Erzeugung der Wechselspannung dabei beispielsweise ein Pulsweitenmodulationsverfahren (PWM-Verfahren) eingesetzt werden. Der Wechselrichter befindet sich zusammen mit Überwachungs- und Steuereinrichtungen auf einer Platine 20 innerhalb des Gehäuses 2 des Primärteils 1. In der Figur sind beispielhaft auf der Platine 20 elektronische Komponenten 21 eingezeichnet. Zum Schutze des Wechselrichters vor einer Resonanzüberhöhung der Amplitude am Resonanzkreis, gebildet aus dem genannten Resonanzkondensator und der Primärspule 10, wird der Resonanzkreis leicht überresonant, also bei Frequenzen oberhalb der Resonanzfrequenz, betrieben.

Bei einer Energieübertragung bedingt die magnetische Kopplung zwischen der Primärspule 10 und sekundärseitigen Spule 10', nachfolgend Sekundärspule 10' genannt, die durch die vorhandenen Ferritkerne 11 und 11' besonders effizient ist. In der Sekundärspule 10' wird eine Spannung induziert, die nach Gleichrichtung, Spannungswandlung - und ggf. Spannungsstabilisierung - als Ausgangsspannung am Anschlusskabel 5' zur Abgabe der übertragenen Energie bereitsteht. Die elektronischen Komponenten auf der Sekundärseite sind ebenfalls auf einer Platine 20' angeordnet, wobei hier wiederum beispielhaft einzelne elektronische Komponenten 21' eingezeichnet sind. Vorteilhaft kann die Sekundärspule einen Mittelabgriff aufweisen, so dass ein Synchrongleichrichter verwendet werden kann.

Sowohl beim Primärteil 1 als auch beim Sekundärteil 1' können zwischen dem jeweiligen Ferritkern 11 und der Platine 20 wärmeleitende Elemente, z.B. Wärmeleitmatten 14, angeordnet sein. Insbesondere bei der Primärseite, aber auch bei der Sekundärseite stellen die auf der Platine 20 angeordneten elektronischen Bauteile 21 eine Verlustquelle im Übertragungsweg dar. Die von diesen Bauelementen 21 erzeugte Verlustwärme wird über die Wärmeleitmatten 14 auf den Ferritkern 11 übertragen. Dadurch wärmt sich der Ferritkern 11 im Betrieb auf eine höhere Betriebstemperatur auf, als dieses ohne die thermische Kopplung an die Platine 20 der Fall wäre.

Bei geeigneten Ferritmaterialien für die Ferritkerne 11 sind über einem weiten Frequenz- und Magnetisierungsbereich die Verluste bei geringerer Temperatur im Ferritkern 11 größer als bei höherer Temperatur. Der zuvor beschriebene Eintrag der Verlustleistung der elektronischen Komponenten als Wärme in den Ferritkern 11 erhöht dessen Temperatur und senkt folglich die durch Ummagnetisierungsvorgänge hervorgerufene Verlustleistung im Ferritkern 11. Dadurch wird der Gesamtwirkungsgrad des Übertragungssystems verbessert. Dieser Effekt kann sowohl auf der Primärseite als auch auf der Sekundärseite genutzt werden. Gleichzeitig wird der vorhandene Ferritkern 11, 11' durch die thermische Kopplung als Kühlkörper für die Elektronikkomponenten 21, 21' eingesetzt, wodurch sich als zusätzlicher Effekt eine Material- und somit Kosteneinsparung ergibt. Anstelle der Wärmeleitmatten 14 kann beispielsweise auch eine Vergussmasse eingesetzt werden, um die Platine 20 und den Ferritkern 11 thermisch zu koppeln.

Bei dem dargestellten Ausführungsbeispiel sind keine ineinandergreifenden Führungs- oder Positionierungselemente vorgesehen, die das Primärteil 1 und das Sekundärteil 1' bei einem Zusammenfügen lateral zueinander ausrichten würden. Durch das Fehlen solcher Elemente können das Primärteil 1 und das Sekundärteil 1' auch durch eine Lateralbewegung, das heißt eine Bewegung in x- und/oder y-Richtung in die Betriebsposition gebracht werden bzw. von einander getrennt werden. Dieses erweist sich gerade im Automatisierungsbereich als besonders vorteilhaft, da eine zusätzliche axiale Bewegung von Primär- und Sekundärteil 1, 1' aufeinander zu zum Etablieren oder Trennen einer Verbindung nicht erforderlich ist. Je nach geplantem Anwendungszweck können in alternativen Ausgestaltungen derartige Führungs- oder Positionierungselemente jedoch auch vorgesehen sein.

Die Ferritkerne 11, 11' erlauben eine hohe magnetische Flussdichte, durch die eine effiziente Energieübertragung auch bei kleinem Spulenvolumen möglich ist. Die Übertragung ist dabei relativ tolerant gegenüber einer lateralen Verschiebung des Primärteils 1 und des Sekundärteils 1' gegeneinander. Dieses ist beispielsweise im Automatisierungsbereich von hohem Vorteil, da auf eine hohe Positioniergenauigkeit zur Etablierung einer konventionellen kontaktbehafteten Steckverbindung verzichtet werden kann.

Anmeldungsgemäß weisen das Primärteil 1 und das Sekundärteil 1' der Vorrichtung zur kontaktlosen Energieübertragung integrierte Datenübertragungseinheiten 30 bzw. 30' auf, die (digitale) Daten bidirektional zwischen dem Primärteil 1 und dem Sekundärteil 1' übertragen. Damit kann über die Vorrichtung zur kontaktlosen Energieübertragung z.B. eine Automatisierungskomponente nicht nur mit Strom, sondern auch mit Daten versorgt werden. Die Vorrichtung zur kontaktlosen Energieübertragung stellt damit kombiniert kontaktlos wichtige Schnittstellen z.B. für ein Wechselwerkzeug bereit.

Die Datenübertragungseinheiten 30 bzw. 30' sind bevorzugt identisch ausgebildet, so dass die Daten bidirektional ohne Vorzugsrichtung übertragbar sind. Die Übertragung erfolgt bevorzugt optisch mit jeweils mindestens einem Sendeelement und mindestens einem Empfangselement in jeder der Datenübertragungseinheiten 30 bzw. 30'. Angeordnet sind die Datenübertragungseinheiten 30 bzw. 30' bei dem dargestellten Ausführungsbeispiel jeweils zentral (in x- und y-Richtung) und mit einer Lichtein- bzw. -austrittsfläche möglichst in der Ebene der Abdeckplatte 3, 3'.

Eine bidirektionale Übertragung kann in einem Vollduplex-Verfahren erfolgen, beispielsweise indem Licht unterschiedlicher Wellenlängen für die beiden Übertragungsrichtungen verwendet wird. Auch bei gleicher Wellenlänge für die beiden Übertragungsrichtungen kann ein Vollduplex-Verfahren durchgeführt werden, z.B. mithilfe von unterschiedlich modulierten Signalen in den beiden Übertragungsrichtungen. Alternativ ist eine bidirektionale Übertragung auch in einem Halbduplex-Verfahren möglich, beispielsweise indem ein Zeitmultiplex-Verfahren mit abwechselnd aufeinanderfolgenden Zeitschlitzen für die beiden Übertragungsrichtungen eingesetzt wird.

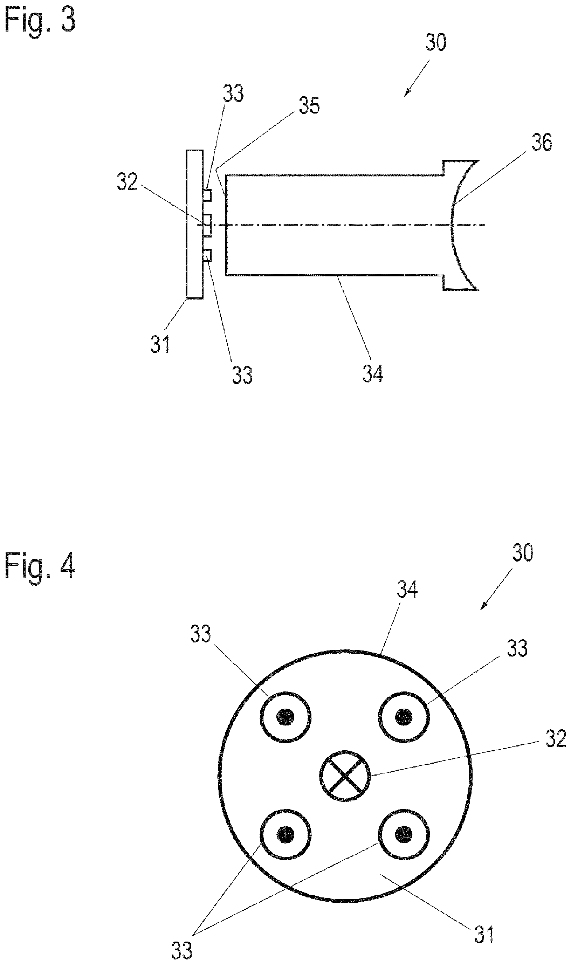

Figur 3 zeigt schematisch eine derartige Datenübertragungseinheit 30 in einem Schnitt entlang der z-Richtung. Figur 4 zeigt eine Draufsicht auf die Datenübertragungseinheit 30 mit Blick aus der z-Richtung.

Die Datenübertragungseinheit 30 weist eine Trägerplatine 31 auf, auf der eine zentral ein Sendeelement 32 angeordnet ist. Das Sendeelement 32 ist seitlich von mehreren, hier vier, Empfangselementen 33 umgeben. Als Sendeelement 32 kann bevorzugt eine Laserdiode oder eine Leuchtdiode eingesetzt werden. Die Empfangselementen 33 sind bevorzugt Photodioden oder Phototransistoren. Die Trägerplatine 31 kann eine separate Platine für die genannten Elemente sein, oder auch ein Abschnitt auf der zuvor erwähnten Platine 20 bzw. 20', auf der auch die elektronischen Bauelemente 21, 21' zur kontaktlosen Energieübertragung angeordnet sind.

Zusätzlich zu den auf der Trägerplatine 31 angeordneten elektrooptischen Elementen sind in dem Primär- bzw. Sekundärteil 1, 1' weitere Komponenten zur Ansteuerung des Sendeelements 32 bzw. zur Auswertung der Signale der Empfangselemente 33 vorgesehen. Datenübertragungsraten von mehr als 20 MBit pro Sekunde konnten in Versuchen bereits erzielt werden, so dass Daten gemäß üblicher in der Automatisierungstechnik verwendeter Feldbusprotokolle problemlos übertragen werden können.

In Richtung des Luftspalts 6 ist vor den Sende- bzw. Empfangselementen axial mit dem Sendeelement 32 ein zylindersymmetrisches Lichtleitelement 34 angeordnet. Das Lichtleitelement 34 weist eine zur Trägerplatine 31 weisende erste Lichtein- bzw. -austrittsfläche 35 und eine zum Luftspalt 6 weisende zweite Lichtein- bzw. -austrittsfläche 36 auf. Hergestellt ist das Lichtleitelement 34 aus einem für die Wellenlänge des verwendeten Lichts transparentem Material, bevorzugt einem Kunststoff oder einem Quarzmaterial. Der Durchmesser liegt bevorzugt im Bereich von 6 bis 10 mm. Dieses ist klein genug, um in den Bauraum zu passen, der im Bereich des inneren Doms 13, 13' des Feritkerns 11, 11' zur Verfügung steht. Andererseits ist diese Abmessung groß genug, um eine Datenübertragung auch bei nicht optimal zueinander positionierten oder ausgerichtetem Primär- bzw. Sekundärteil 1, 1' zuzulassen.

Anmeldungsgemäß ist die erste Lichtein- bzw. -austrittsfläche 35 planar und die zweite Lichtein- bzw. -austrittsfläche 36 konkav. Diese Kombination führt zu einer Übertragung, die besonders tolerant im Hinblick auf einen lateralen Versatz (d.h. in x- und/oder y-Richtung) und einer Abstandsvariation (in z-Richtung) von Primärteil 1 und Sekundärteil 1' zueinander ist. Insbesondere führt eine Abstandsvariation von 0 < z₀ < 5 mm und eine Lateralverschiebung von -2 mm bis 2 mm in x- und/oder y-Richtung zu keiner signifikanten Verschlechterung der Datenübertragungsrate. Diese ist zudem unabhängig von einer Verdrehung von Primärteil 1 zu Sekundärteil 1' um die z-Achse und gegenüber einer Verkippung gegeneinander um bis zu +/- 3°.

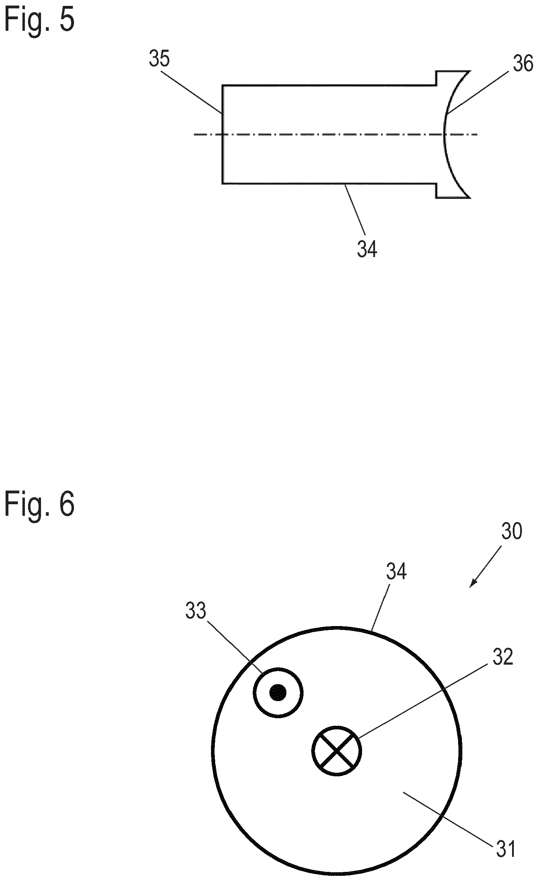

Figur 5 zeigt das auch in den Figuren 3 und 4 dargestellte Lichtleitelement 34 in einer Schnittdarstellung entlang der z-Achse.

Figur 6 zeigt in ähnlicher Weise wie Figur 4 eine alternative Ausgestaltung einer Datenübertragungseinheit 30 in einer eine Draufsicht mit Blick aus der z-Richtung. Wie beim Ausführungsbeispiel der Figur 4 ist zentral das Sendeelement 32 angeordnet. Im Unterschied zum Ausführungsbeispiel der Figur 4 sind nicht mehrere Empfangselemente 33 um das Sendeelement 32 angeordnet, sondern lediglich ein Empfangselement 33. Aufgrund der Übertragungseigenschaften des Lichtleitelements 34 ist das eine exzentrisch vom Sendeelement 32 angeordnete Empfangselement 33 selbst dann ausreichend, wenn sich primär Teil 1 und sekundär Teil 1' nicht exakt mittig zueinander positioniert und gegebenenfalls leicht gekippt zueinander gegenüber stehen.

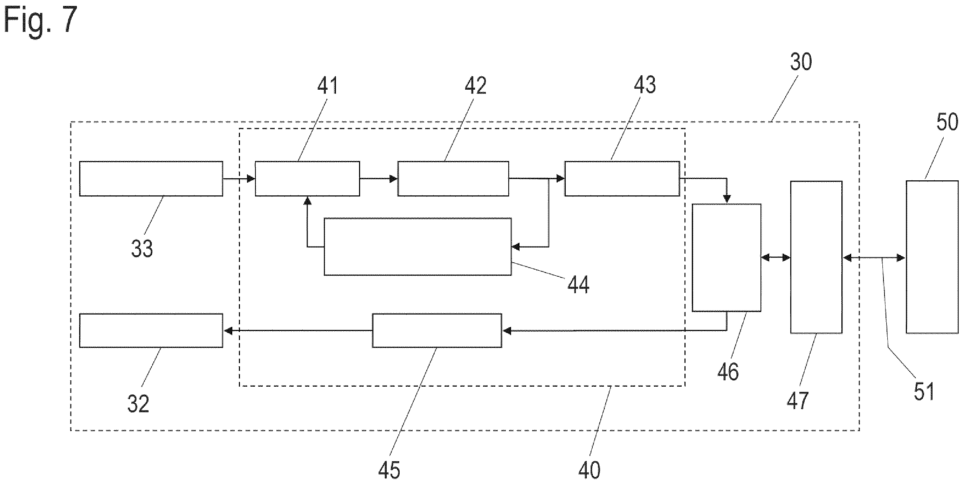

Figur 7 verdeutlicht anhand eines Blockschaltbilds die Funktionsweise der Datenübertragungseinheit 30. Während im Zusammenhang mit Figur 3 insbesondere der optische Abschnitt der Datenübertragung betrachtet wird, steht bei Figur 7 der elektronische Abschnitt der Datenübertragung im Vordergrund.

Bevorzugt sind die elektronischen Komponenten der Datenübertragungseinheit 30 ebenfalls unmittelbar auf der Trägerplatine 31 möglichst nah benachbart am Sendeelement 32 bzw. Empfangselement 33 angeordnet, um Störeinflüsse zu minimieren.

Unmittelbar mit dem Sendeelement bzw. dem Empfangselement 32, 33 ist eine Signalaufbereitung 40 gekoppelt. Diese umfasst im Empfangszweig einen mit dem Empfangselement 30 verbundenen Verstärker 41, dessen Ausgang über einen Filter 42, insbesondere einen Hochpassfilter, einem Komparator 43 zugeführt wird. Der Komparator 43 digitalisiert das bis dahin analoge Signal und leitet es zur weiteren Verarbeitung weiter.

Optional wird das am Ausgang des Filters 42 abgegebene einem Spitzenwertdetektor 44 zugeführt, der z.B. mittels eines gleitenden Betrachtungsfensters einen temporären Spitzenwert der Signalhöhe bestimmt und abhängig von dem bestimmten Spitzenwert eine Verstärkung des Verstärkers 41 einstellt. Auf diese Weise wird eine Pegelanpassung realisiert und die Verstärkung für das empfangenen Signal auf einen optimalen Wert eingestellt, sodass am Ausgang des Filters 42 ein gut digitalisierbares Signal zur Verfügung steht, mit gleichbleibender Signalhöhe, die in weiten Grenzen unabhängig von der Güte des am Empfangselement 33 empfangenen Signals ist.

Im Hinblick auf den Sendekanal umfasst die Signalaufarbeitung 40 einen Treiber 45, der das Sendeelement 32 ansteuert.

Der Signalaufarbeitung 40 vorgeschaltet ist ein Signalverarbeitungsbaustein 46, der mit einem Schnittstellenbaustein 47 verbunden ist. Der Schnittstellenbaustein 47 dient der Ankopplung an ein Datennetz 50 über eine Datenleitung 51.

Die über das Datennetz 50, beispielsweise einen Feldbus, an der Datenübertragungseinheit 30 ankommenden Daten werden vom Schnittstellenbaustein 47 entgegen genommen. Im Signalverarbeitungsbaustein 46 wird hieraus ein geeigneter binärer Datenrahmen erzeugt, der dann über die Signalaufarbeitung 40 und das Sendeelement 32 abgegeben wird. Umgekehrt werden vom Empfangselement 33 empfangene Signale in dem Komparator 43 in ein binäres Signal gewandelt, welches dann über den Signalverarbeitungsbaustein 46 und dem Schnittstellenbaustein 47 ins Datennetz 50 gesendet wird.

### Bezugszeichenliste

- 1: Primärteil
- 1': Sekundärteil
- 2, 2': Gehäuse
- 3, 3': Abdeckplatte
- 4, 4': Kabeldurchführung
- 5, 5': Anschlusskabel
- 6: Luftspalt

- 10: Primärspule
- 10': Sekundärspule
- 11, 11': Ferritkern
- 12, 12': äußerer Rand
- 13, 13': innerer Dom
- 14, 14': Wärmeleitmatte

- 20, 20': Platine
- 21, 21': elektronische Bauelemente

- 30: Datenübertragungseinheit
- 31: Trägerplatine
- 32: Sendeelement
- 33: Empfangselement
- 34: Lichtleitelement
- 35: erste Lichtein- bzw. -austrittsfläche
- 36: zweite Lichtein- bzw. -austrittsfläche

- 40: Signalaufbereitung
- 41: Verstärker
- 42: Filter
- 43: Komparator
- 44: Spitzenwertdetektor
- 45: Treiber
- 46: Signalverarbeitungsbaustein
- 47: Schnittstellenbaustein
- 50: Datennetz
- 51: Datenleitung

- x, y, z: kartesische Koordinaten
- z₀: Abstand

## Patentansprüche

1. Vorrichtung zur kontaktlosen induktiven Energieübertragung von einem Primärteil (1) zu einem Sekundärteil (1'), die jeweils mindestens eine Spule (10, 10') aufweisen, die induktiv über einen Luftspalt (6) hinweg miteinander koppelbar sind, wobei das Primärteil (1) und das Sekundärteil (1') jeweils eine Datenübertragungseinheit (30, 30') zur optisch erfolgenden Übertragung von Daten über den Luftspalt (6) aufweisen, wobei die Datenübertragungseinheiten (30,30') jeweils mindestens ein Sendeelement (32) und mindestens ein Empfangselement (33) aufweisen, wobei die Datenübertragungseinheiten (30, 30') jeweils ein Lichtleitelement (34) aufweisen und das Lichtleitelement (34) im Wesentlichen zylindrisch geformt ist und **dadurch gekennzeichnet, dass** das Lichtleitelement (34) eine zu Sende- bzw. Empfangselementen (32, 33) weisende erste Lichtein- bzw. -austrittsfläche (35) und eine zum Luftspalt (6) weisende zweite Lichtein- bzw. -austrittsfläche (36) aufweist, wobei die erste Lichtein- bzw. -austrittsfläche (35) planar und die zweite Lichtein- bzw. -austrittsfläche (36) konkav geformt ist.

2. Vorrichtung nach Anspruch 1, bei der die Datenübertragungseinheiten (30, 30') mittig und konzentrisch zu den Spulen (10, 10') angeordnet sind.

3. Vorrichtung nach Anspruch 2, wobei bei jeder Datenübertragungseinheit (30, 30') ein zentrales Sendeelement (32) vorgesehen ist, das von mehreren Empfangselementen (33) umgeben ist.

4. Betriebsverfahren für eine Vorrichtung zur kontaktlosen induktiven Energieübertragung von einer Spule (10) eines Primärteils (1) zu einer Spule (10') eines Sekundärteils (1') über einen Luftspalt (6) gemäß einem der Ansprüche 1 bis 3, **dadurch gekennzeichnet, dass** während der induktiven Energieübertragung von dem Primärteil (1) zu dem Sekundärteil (1') eine optische Übertragung von Daten zwischen dem Primärteil (1) und dem Sekundärteil (1') über den Luftspalt (6) mithilfe von Datenübertragungseinheiten (30, 30'), die in das Primärteil (1) und das Sekundärteil (1') integriert sind, erfolgt.

5. Betriebsverfahren nach Anspruch 4, bei dem die Ubertragung der Daten bidirektional in einem Halb- oder Vollduplex-Verfahren erfolgt.

## Claims

1. A device for contactless inductive energy transmission from a primary part (1) to a secondary part (1'), each having at least one coil (10, 10') which can be inductively coupled to one another via an air gap (6), wherein the primary part (1) and the secondary part (1') each have a data transmission unit (30, 30') for an optical transmission of data via the air gap (6), wherein the data transmission units (30, 30') each have at least one transmitting element (32) and at least one receiving element (33), wherein the data transmission units (30, 30') each have a light-conducting element (34) and wherein the light-conducting element (34) is basically cylindrical in shape, **characterized in that** the light-conducting element (34) has a first light entry or exit surface (35) facing the transmitting or receiving elements (32, 33) and a second light entry or exit surface (36) facing the air gap (6), wherein the first light entry and exit surface (35) is planar and the second light entry and exit surface (36) is concave in shape.

2. The device of Claim 1, in which the data transmission units (30, 30') are arranged centrally and concentrically with the coils (10, 10').

3. The device of Claim 2, whereby a central transmission element (32) is provided at each data transmission unit (30, 30') and is surrounded by several receiving elements (33).

4. An operating method for a device for contactless inductive energy transmission from a coil (10) of a primary part (1) to a coil (10') of a secondary part (1') via an air gap (6) according to one of Claims 1 to 3, **characterized in that** during the inductive energy transmission from the primary part (1) to the secondary part (1'), an optical transmission of data takes place between the primary part (1) and the secondary part (1') via the air gap (6) by means of data transmission units (30, 30') which are integrated in the primary part (1) and the secondary part (1').

5. The operating method of Claim 4, in which the transmission of the data takes place bidirectionally in a half or full duplex procedure.

## Revendications

1. Dispositif pour la transmission d'énergie sans contact par induction d'une partie primaire (1) à une partie secondaire (1') comportant chacune au moins une bobine (10, 10'), qui peuvent être couplées par induction l'une avec l'autre au-delà d'un entrefer (6), dans lequel la partie primaire (1) et la partie secondaire (1') présentent chacune une unité de transmission de données (30, 30') pour la transmission par voie optique de données via l'entrefer (6), dans lequel les unités de transmission de données (30, 30') présentent chacune un élément émetteur (32) et au moins un élément récepteur (33), dans lequel les unités de transmission de données (30, 30') présentent chacune un élément formant guide d'ondes lumineuses (34) et l'élément formant guide d'ondes lumineuses (34) a une forme sensiblement cylindrique, **caractérisé en ce que** l'élément guide d'ondes lumineuses (34) présente une première surface d'entrée ou de sortie de la lumière (35) tournée vers les éléments émetteurs ou récepteurs (32, 33) et une deuxième surface d'entrée ou de sortie de la lumière (36) tournée vers l'entrefer (6), la première surface d'entrée ou de sortie de la lumière (35) étant plane et la deuxième surface d'entrée ou de sortie de la lumière (36) ayant une forme concave.

2. Dispositif selon la revendication 1, dans lequel les unités de transmission de données (30, 30') sont disposées au milieu et de façon concentrique par rapport aux bobines (10, 10').

3. Dispositif selon la revendication 2, dans lequel chaque unité de transmission de données (30, 30') comporte un élément émetteur (32) central qui est entouré par plusieurs éléments récepteurs (33).

4. Méthode de fonctionnement d'un dispositif pour la transmission d'énergie sans contact par induction d'une bobine (10) d'une partie primaire (1) à une bobine (10') d'une partie secondaire (1') via un entrefer (6) selon l'une des revendications 1 à 3, **caractérisée en ce que** pendant la transmission d'énergie par induction de la partie primaire (1) à la partie secondaire (1'), une transmission optique de données se produit entre la partie primaire (1) et la partie secondaire (1') via l'entrefer (6) à l'aide d'unités de transmission de données (30, 30') qui sont intégrées dans la partie primaire (1) et dans la partie secondaire (1').

5. Méthode de fonctionnement selon la revendication 4, dans laquelle la transmission des données est bidirectionnelle et s'effectue en procédé semi-duplex ou duplex intégral.
